# EUROPEAN PATENT APPLICATION

(11) **EP 2 063 164 A1**
(43) Date of publication of application: **27.05.2009**
(21) Application number: 07806138.9
(22) Date of filing: 28.08.2007
(51) Int. Cl.: F16L 19/08

(54) **BITE-IN TYPE PIPE JOINT, REFRIGERATING APPARATUS, AND WATER HEATING DEVICE**

(30) Priority: 12.09.2006 JP 2006247149
(71) Applicant: Daikin Industries, Ltd., Osaka 530-8323 (JP)
(72) Inventor: NAKATA, Haruo, Sakai-shi, Osaka 5918511 (JP); SHIMAMURA, Takashi, Sakai-shi, Osaka 5918511 (JP); KOIZUMI, Jun, Sakai-shi, Osaka 5918511 (JP)
(74) Representative: HOFFMANN EITLE
(86) International application number: PCT/JP2007/066659
(87) International publication number: WO 2008/032564

(57) **Abstract**

A bite-in type pipe joint that has a ferrule formed integrally with a joint member with an external thread and prevents damage to an outer surface of the ferrule so as to avoid decrease of air tightness is provided. Also, a refrigerating apparatus and a water heating device each having the bite-in type pipe joint are provided. The bite-in type pipe joint includes a joint member 1 having an internal thread 11 and a joint member 2 having an external thread 21. A ferrule 3 is formed integrally with the joint member 2. By the time the joint members 1, 2 are fastened to each other, the ferrule 3 separates from the joint member 2 and bites into a pipe 4. The joint member 2 has a cylindrical cover 22 that covers the ferrule 3, which has an annular shape. This structure prevents a distal portion 3a and a tapered surface 31 of the ferrule 3 from being damaged when the joint member 2 is handled.

## Description

### TECHNICAL FIELD

The present invention relates to a bite-in type pipe joint including a joint member having an internal thread and a joint member having an external thread, which is screwed into the internal thread. The invention relates to, particularly, a bite-in type pipe joint in which a ferrule is formed integrally with a joint member having an external thread and separates from the joint member having the external thread while being held in a state biting into a pipe when the pipe is joined completely. Also, the invention relates to a refrigerating apparatus and a water heating device such as a water heater each including the bite-in type pipe joint.

### BACKGROUND ART

A bite-in type pipe joint including a joint member having an internal thread and a joint member having an external thread, which is screwed into the internal thread, is employed in, for example, a refrigerant pipe of a refrigerating apparatus, a hot-water pipe of a water heating device, or a pipe system of a water supply pipe. As one such bite-in type pipe joint, Patent Document 1 discloses a joint configured by a joint port body having an external thread and a nut having an internal thread screwed onto the external thread, in which an independent ferrule (a bite-in type sleeve) is arranged between these joint members. However, since this bite-in type pipe joint employs the independent ferrule, the ferrule may be lost before a pipe is joined. Also, since the independent ferrule, which is small-sized, must be incorporated between the joint members when the pipe is joined, the joint is difficult to install. Further, since the ferrule is handled as an independent component, a seal surface and a bite-in portion of the ferrule may be easily damaged.

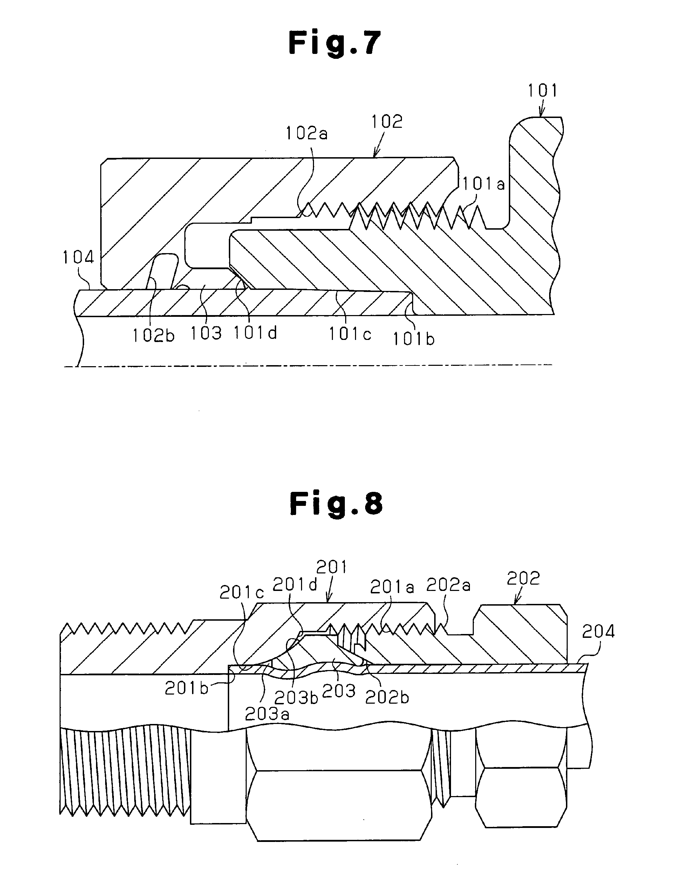

To solve these problems, a bite-in type pipe joint in which a ferrule is formed integrally with a joint member is now attracting attention. As such a bite-in type pipe joint, a joint disclosed in Patent Document 2 may be cited as an example. Fig. 7 is a cross-sectional view showing the bite-in type pipe joint in an assembled state at an initial stage of fastening of the joint. In the bite-in type pipe joint, a body portion 101 serving as a joint member having an external thread 101a configures a joint member serving as the body of the bite-in type pipe joint. A ferrule 103 is formed integrally with and inside a nut 102 serving as a joint member having an internal thread 102a screwed onto the external thread 101a. In a final pipe joint state, the ferrule 103 is separated from the nut 102. In the following description, the technique of this bite-in type pipe joint will be referred to as the prior art A. In the present application, the joint member as the body of the bite-in type pipe joint is a joint member secured to a pipe arranged in advance at a predetermined position and represented by the reference numeral 101 in Fig. 7. Further, the joint member as the body of the bite-in type pipe joint has a pipe insertion hole (represented by the reference numeral 101c in Fig. 7) having a counterbore (represented by the reference numeral 101b in the drawing) in which a pipe to be joined (represented by the reference numeral 104 in the drawing) is inserted. The pipe insertion hole is provided in an opening to which another joint member is connected.

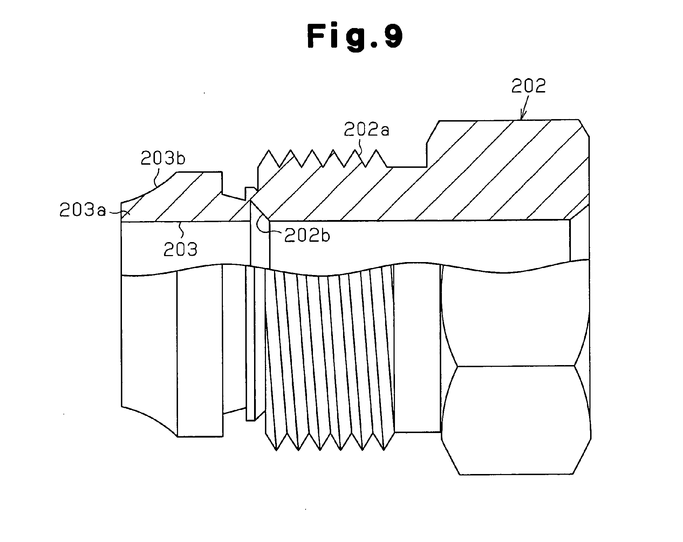

Patent Document 3 discloses a bite-in type pipe joint different from the prior art A. Fig. 8 is a cross-sectional view showing the bite-in type pipe joint in an assembled state at a stage in which assembly of the bite-in type pipe joint is completed. Fig. 9 is a cross-sectional view showing a portion of a joint member having an external thread. As illustrated in Figs. 8 and 9, in the bite-in type pipe joint, a joint member 201 having an internal thread 201a configures a joint member serving as the body of the bite-in type pipe joint. A ferrule 203 is formed integrally with a joint member 202 having an external thread 202a and in a distal portion of the joint member 202. In a final pipe joint state, the ferrule 203 is isolated from the joint member 202 with the external thread 202a. In the following description, the technique of this bite-in type pipe joint will be referred to as the prior art B. In Fig. 8, a pipe to be joined is represented by the reference numeral 204 and a pipe insertion hole with a counterbore 201b is represented by the reference numeral 201c.
Patent Document 1: Japanese Laid-Open Patent Publication No. 2003-74768
Patent Document 2: Japanese National Phase Patent Publication No. 2004-526911
Patent Document 3: US Patent No. 4022497

### DISCLOSURE OF THE INVENTION

However, in the prior art A, the ferrule 103 is arranged at a position deep inside the nut 102. As a result, an annular pressing surface 102b, which presses a distal surface of the ferrule 103 against a cam surface 101d after the ferrule 103 has been isolated, is formed at a position deep inside the ferrule 103. That is, the internal thread 102a and the pressing surface 102b of the nut 102 are formed inside the nut 102. As a result, to provide the internal thread 102a and the pressing surface 102b, the nut 102 is cut by a side-facing tool from the side corresponding to the opening of the nut 102. Accordingly, as the distance from the opening of the nut 102 becomes greater, the center of machining becomes offset more easily. As a result, between the internal thread 102a and the pressing surface 102b having different distances from the opening of the nut 102, the offset amount of the center of machining becomes great. Also, the accuracy of the angle of the pressing surface 102b, which is located at a position deep inside the nut 102, is lowered. As a result, pressing of the ferrule 103 against the cam surface 101d by the pressing surface 102b becomes uneven, thus decreasing air tightness ensured by the ferrule 103.

As of the prior art B, an annular pressing surface 202b, which presses a proximal surface of the ferrule 203 against a cam surface 201d after the ferrule 203 has been isolated, is formed at a position substantially coinciding with the position of a distal portion of the external thread 202a. This improves the accuracy of the angle of the pressing surface 202b with respect to the axis of the joint member 202 and the accuracy of the axis of the pressing surface 202b, compared to the prior art A. As a result, the disadvantageous uneven pressing of the prior art A is greatly improved. However, since the ferrule 203 is exposed to the exterior, a distal portion 203a and a seal surface 203b of the ferrule 203 are easily damaged.

Accordingly, it is an objective of the present invention to provide a bite-in type pipe that includes a ferrule formed integrally with a joint member having an external thread and avoids decrease in air tightness by preventing damage to an outer surface of the ferrule. It is another objective of the invention to provide a refrigerating apparatus and a water heating device each having the bite-in type pipe joint.

To achieve the foregoing objective and in accordance with a first aspect of the present invention, a bite-in type pipe joint employed to join a pipe is provided. The pipe joint includes a joint member having an internal thread and a joint member having an external thread screwed into the internal thread. The joint member having the external thread includes an annular ferrule secured to the joint member and a cylindrical cover covering an outer circumference of the ferrule. The ferrule separates from the joint member having the external thread and bites into the pipe by the time the joint members are fastened to each other.

In the bite-in type pipe joint that has the above-described structure, the cylindrical cover, which covers the outer circumference of the ferrule, prevents the ferrule from being exposed to the exterior. The outer surface of the ferrule is thus prevented from being damaged when, for example, a pipe is joined or a component is transported. Also, since the ferrule is isolated and bites into the pipe when the joint members are assembled completely, the joint members are unscrewed when it is necessary to remove the pipe. Accordingly, in maintenance work, for example, the pipe can be easily removed even after being joined.

It is preferable that, when the joint members are fastened to each other, the ferrule separate from the joint member having the external thread and function as an independent ferrule. In this structure, as in the case of a ferrule provided independently from the joint members, axial pressing force is applied from the joint member to the ferrule so that the axial pressing force acts to deform the ferrule in such a manner that the ferrule bites into a surface of a pipe. This improves the air tightness ensured by the ferrule.

It is preferable that the joint member having the internal thread have a cam surface with which a distal portion of the ferrule comes into contact when the joint members are fastened to each other. In this case, the ferrule separates from the joint member having the external thread by receiving the axial pressing force while held in contact with the cam surface before biting into the pipe. This suppresses damage to the surface of the pipe into which the ferrule bites and the cam surface, which are caused through rotation of the ferrule. The air tightness brought about by the ferrule is thus enhanced.

It is preferable that the ferrule be secured to the joint member having the external thread by a thin portion that extends in a direction crossing the axis of the joint member having the external thread. This structure allows the ferrule to be easily separated by the axial pressing force produced by fastening the joint members.

It is preferable that the thin portion have an annular shape. In this configuration, the ferrule, which has an annular shape, is connected by the annular thin portion. As a result, the thin portion is cut off uniformly in a substantially entire portion. This prevents the ferrule from biting into the pipe in an uneven manner and improves the air tightness ensured by the ferrule.

It is preferable that the thin portion be formed forward from a distal end of the external thread in the axial direction of the joint member having the external thread. This arrangement allows the joint member having the external thread to be machined while maintaining the strength of the joint member. The axis of the external thread is thus prevented from becoming offset. This suppresses uneven contact of the ferrule so as to avoid decrease in the air tightness brought about by the ferrule.

It is preferable that the cylindrical cover be formed in a manner extending continuously from a wall provided forward from the distal end of the external thread in the axial direction of the joint member having the external thread. This structure facilitates fabrication of the cylindrical cover, which covers the outer circumference of the ferrule.

It is preferable that a distal end of the ferrule be arranged in the cylindrical cover. This arrangement protects the distal portion of the ferrule, which may decrease the air tightness ensured by the ferrule if damaged.

It is preferable that the joint member having the internal thread include a cylindrical recess that is located between an outer wall of the joint member and the cam surface and accommodates the cylindrical cover when the joint members are fastened to each other. This structure reliably accommodates the cylindrical cover, which proceeds into the joint member having the internal thread when the joint member having the external thread is fastened.

It is preferable that the pipe joint having the external thread include an annular pressing surface that is located at a position spaced rearward from the ferrule by a predetermined distance and presses a proximal surface of the ferrule that has been isolated and functions as the independent ferrule. In this structure, the pressing surface is located close to the distal portion of the external thread in the axial direction of the joint member having the external thread. This reduces the offset amount of the axes of the external thread and the pressing surface.

It is preferable that the pressing surface be formed in the vicinity of the distal end of the external thread and rearward from the distal end of the external thread in the axial direction of the joint member having the external thread. This arrangement minimizes the offset amount of the axes of the pressing surface and the external thread while maintaining strength of the joint member having the external thread.

In accordance with a second aspect of the present invention, a refrigerating apparatus is provided that includes the above described bite-in type pipe joint that is provided in a refrigerant circuit, in a water circuit, or in both of the refrigerant circuit and the water circuit. In accordance with a third aspect of the present invention, a water heating device is provided that includes the above described bite-in type pipe joint that is provided in a water heating circuit, in a water supply circuit, or in both of the water heating circuit and the water circuit. The refrigerating apparatus and the water heating device with the above-described configuration decrease leakage of fluid from the pipe joint, thus enhancing reliability.

### BRIEF DESCRIPTION OF THE DRAWINGS

Fig. 1 is a cross-sectional view showing a bite-in type pipe joint according to an embodiment of the present invention in an initial state of fastening;
Fig. 2 is an enlarged cross-sectional view showing a main portion of the bite-in type pipe joint in a state in which a distal portion of a ferrule contacts a cam surface after fastening has started;
Fig. 3 is an enlarged cross-sectional view showing a main portion of the bite-in type pipe joint in a state in which the ferrule is isolated after the fastening has started;
Fig. 4 is an enlarged cross-sectional view showing a main portion of the bite-in type pipe joint in a state in which the fastening is completed;
Fig. 5 is an enlarged cross-sectional view showing the cam surface of the bite-in type pipe joint;
Fig. 6 is an enlarged cross-sectional view showing the ferrule of the bite-in type pipe joint;
Fig. 7 is a cross-sectional view showing an example of conventional bite-in type pipe joints in which a ferrule is formed integrally with a joint member having an internal thread;
Fig. 8 is a cross-sectional view showing a portion of a conventional bite-in type pipe joint in which a ferrule is formed integrally with a joint member having an external thread; and
Fig. 9 is a cross-sectional view showing a portion of a joint member having an external thread of a bite-in type pipe joint.

### BEST MODE FOR CARRYING OUT THE INVENTION

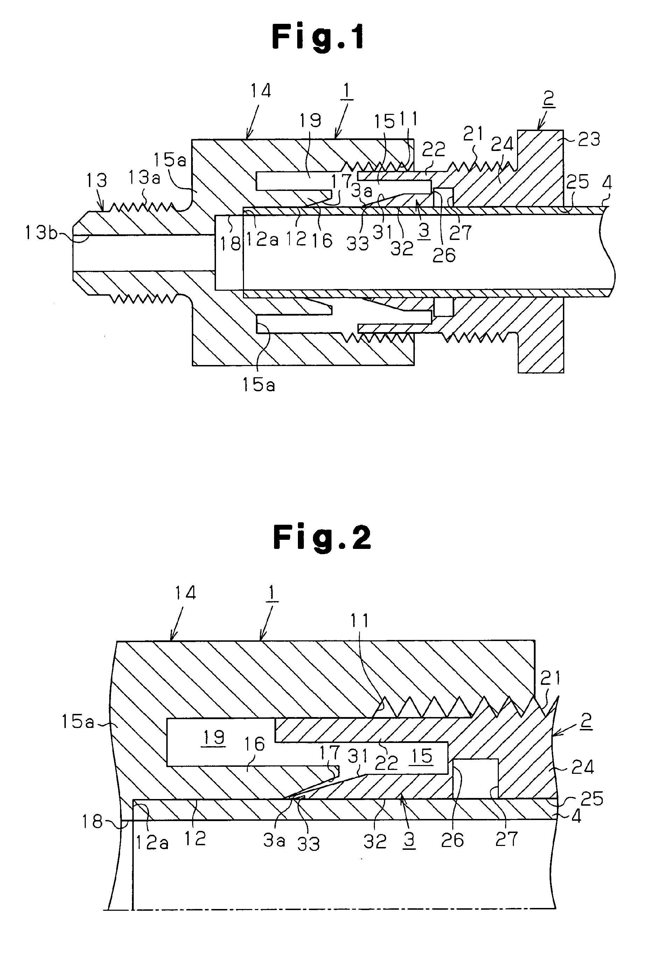

A bite-in type pipe joint according to one embodiment of the present invention will now be described with reference to the attached drawings. Fig. 1 is a cross-sectional view showing the bite-in type pipe joint of the present embodiment. The bite-in type pipe joint of the embodiment is used in, for example, a refrigerant pipe or a water supply pipe of a refrigerating apparatus or a water heating device. The bite-in type pipe joint has a joint member 1 having an internal thread 11 and a joint member 2 having an external thread 21, which is screwed into the internal thread 11. The joint member 1 with the internal thread 11 is a joint member having a pipe insertion hole 12 with a stepped portion (a counterbore) 12a, in which a pipe 4 to be joined by the bite-in pipe joint of the present embodiment is inserted. In the present embodiment, the joint member 1 having the internal thread 11 is configured as the body of the bite-in type pipe joint. In the following explanation, the joint member 1 having the internal thread 11 will be referred to as a first joint member 1, and the joint member 2 having the external thread 21 will be referred to as a second joint member 2. Also, the leftward direction in Fig. 1, or the distal direction of the ferrule 3 formed integrally with the second joint member 2, will be referred to as the frontward direction. Similarly, the rightward direction in Fig. 1 will be referred to as the rearward direction.

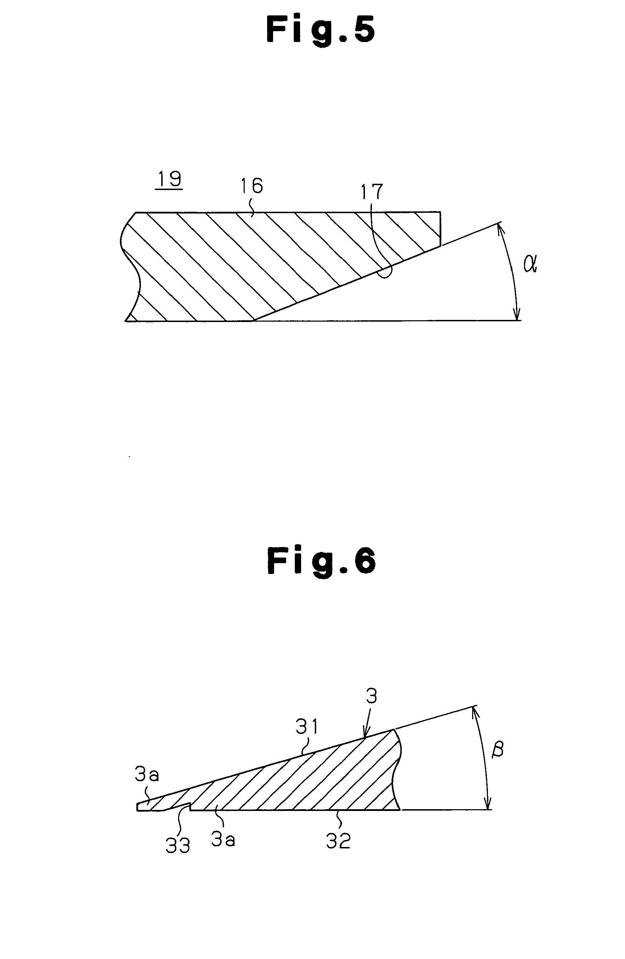

A joint port 13 having an external thread 13a, which is formed on the outer circumference of the joint port 13, is provided at a front end portion of the first joint member 1. A body portion 14 is formed at a rear end portion of the first joint member 1. The body portion 14 has a substantially bowl-shaped hollow portion 15 with a rear opening, which is defined in the body portion 14. An internal thread 11 is formed on the inner circumferential surface of the body portion 14 and extends forward from the rear opening. A cylindrical pipe support portion 16, which extends rearward and along the axial direction of the first joint member 1, is formed in a wall portion 15a, which is located forward and configures the bottom of the hollow portion 15. The pipe support portion 16 projects to a middle section of the hollow portion 15. A cam surface 17, which contacts a distal portion 3a of the ferrule 3, is formed at the distal end of the pipe support portion 16. As shown in the enlarged view of Fig. 5, the cam surface 17 has a tapered shape having a diameter that becomes greater in an outward direction. The inclination angle α of the cam surface 17 with respect to a line extending along the axis of the first joint member 1 is slightly greater than the inclination angle β of a tapered surface 31 of the ferrule 3 with respect to a line extending along the axis of the ferrule 3, as illustrated in Fig. 6. The inclination angle α is substantially 20 degrees and the inclination angle β is substantially 15 degrees.

A front end portion of the cam surface 17 is provided continuously from the pipe insertion hole 12, in which the pipe 4 to be joined is inserted. The diameter of the pipe insertion hole 12 is set to a diameter substantially equal to the diameter of the outline of the pipe 4 to be joined so that the pipe 4 is passed through the pipe insertion hole 12. A communication passage 18 sized substantially equal to the inner diameter of the pipe 4 is provided in a front section of the pipe insertion hole 12. The stepped portion (the counterbore) 12a is formed between the pipe insertion hole 12 and the communication passage 18. The pipe insertion hole 12 is connected to the communication passage 18 through the stepped portion 12a. Since the distal surface of the pipe 4 to be joined contacts the stepped portion 12a when the bite-in type pipe joint is installed, the stepped portion 12a maintains a constant inserting position of the pipe 4. A communication passage 13b with a smaller diameter, serving as a refrigerant passage, is provided forward from the communication passage 18, or at the center of the joint port 13, in such a manner as to have an opening faced forward from the joint port 13.

A cylindrical recess 19 is arranged between the pipe support portion 16, which has the cam surface 17 formed at the rear end of the pipe support portion 16, and an outer wall of the body portion 14. The cylindrical recess 19 receives a cylindrical cover 22 provided in the second joint member 2, which will be described below. In other words, the cylindrical cover 22 enters the cylindrical recess 19 when the second joint member 2 is fastened, and proceeds in the cylindrical recess 19. As a result, the inner diameter, the hollow thickness, and the hollow depth of the cylindrical recess 19 are set to such values that the cylindrical cover 22 is not interfered when proceeding in the cylindrical recess 19.

The outer wall of the body portion 14 with the cylindrical recess 19 has at least two opposing flat surfaces, or, preferably, is formed like a hexagonal nut, so that the body portion 14 can be held by a fastening tool.

A holding portion 23, which enables holding by a fastening tool such as a hexagonal nut, is formed at a rear end portion of the second joint member 2, as in the body portion 14 of the first joint member 1. An external thread portion 24 having an external thread 21, which is formed on the outer circumference of the external thread portion 24 and screwed into the internal thread 11 of the first joint member 1, is provided forward from the holding portion 23. The portion extending from the holding portion 23 to the external thread portion 24 is configured as a substantially solid portion. A pipe through hole 25, through which the pipe 4 to be joined is passed, is provided at the center of the solid portion. The ferrule 3 is arranged at a predetermined distance from a front wall of the external thread portion 24.

The ferrule 3 is formed as an annular body that is axially elongated and has a predetermined length, and has a through hole 32, which extends along the axis of the ferrule 3 and receives the pipe. A rear end portion of the ferrule 3 has a substantially uniform thickness along a radial direction of the ferrule 3. As illustrated in Fig. 6, a distal portion of the ferrule 3 has a substantially truncated cone-like shape. A tapered surface 31 that forms the truncated cone-like shape is formed at an acute angle with respect to the axis of the ferrule 3. The inclination angle β of the tapered surface 31 is slightly smaller than the inclination angle α of the cam surface 17, as has been described. A small notch 33 having a substantially triangular shape is formed on the inner circumferential surface defining the through hole 32 in the vicinity of the distal end of the ferrule 3. With reference to Fig. 6, the notch 33 has a triangular cross section and the point of the triangle is located distally in the ferrule 3. Since the distal portion 3a of the ferrule 3 is formed thin and the notch 33 is provided, the distal portion 3a easily bends toward the axis of the ferrule 3 when the ferrule 3 is pressed against the cam surface 17 by axial pressing force.

A rear end portion of the ferrule 3 is connected to the external thread portion 24 through an annular thin portion 26 provided in a front portion of the external thread portion 24. The thin portion 26 is provided in the vicinity of the distal end of the external thread 21 and forward from the distal end of the external thread 21 in the axial direction of the second joint member 2. In this manner, the ferrule 3 is connected integrally with the second joint member 2 at the thin portion 26. The ferrule 3 thus moves axially together with the second joint member 2. However, if resistance is generated against movement of the ferrule 3, axial force acts on the thin portion 26. This fastens the second joint member 2 to the first joint member 1 so that the second joint member 2 moves in the axial direction. As the distal portion 3a of the ferrule 3 contacts the cam surface 17, the resistance of the cam surface 17 applies axial force to the thin portion 26. When the axial force reaches a predetermined level, the thin portion 26 is cut and the ferrule 3 is isolated from the second joint member 2. By employing the thin portion 26 as a connecting portion of the ferrule 3, the ferrule 3 is separated from the second joint member 2 when the second joint member 2 is fastened. The isolated ferrule 3 functions in a manner similar to a ferrule provided independently from the joint members 1, 2.

Accordingly, the thickness of the thin portion 26 is set to such a value that the thin portion 26 is isolated from the second joint member 2 by the axial pressing force produced by fastening the second joint member 2. The pressing force that acts to cut the thin portion 26 is set in correspondence with the thickness of the thin portion 26. For example, while the thickness of the thin portion 26 is set to a great value, the pressing force that acts to cut the thin portion 26 may be set to a level substantially equal to the pressing force produced by fastening the second joint member 2 using a fastening tool. Alternatively, while the thickness of the thin portion 26 is set to a small value, the pressing force that acts to cut the thin portion 26 may be set to a level substantially equal to the pressing force produced by manual fastening of the second joint member 2 by the operator. Although the thin portion 26 with the small thickness is difficult to form, joining of the joint members 1, 2 is facilitated, and the ferrule 3 is substantially prevented from rotating when the second joint member 2 is fastened. The thin portion 26 is thus cut before the ferrule 3 bites into a surface of the pipe 4 to be joined. As a result, if the thickness of the ferrule 3 is set to a small value, scratches on the surface of the pipe 4 and the cam surface 17 caused by rotation of the ferrule 3 are suppressed.

The pressing surface 27, which further presses the ferrule 3 against the cam surface 17 after the ferrule 3 is isolated from the second joint member 2, is provided in a front wall surface of the external thread portion 24 at a position spaced from the proximal surface of the ferrule 3 by a predetermined distance. The pressing surface 27 extends substantially perpendicular to the axis of the second joint member 2 and has an annular shape facing the proximal surface of the ferrule 3. The pressing surface 27 is arranged in the vicinity of the distal end of the external thread 21 and rearward from the distal end of the external thread 21 in the axial direction of the second joint member 2. That is, the pressing surface 27 and the external thread 21 are provided at the same position in the axial direction of the second joint member 2. This suppresses the offset amount between the axis of the external thread 21 and the axis of the pressing surface 27.

The cylindrical cover 22 is arranged outside the ferrule 3 in the second joint member 2 at a position spaced from the ferrule 3 by a predetermined distance in a radial direction of the ferrule 3. The cylindrical cover 22 prevents the ferrule 3 from being exposed to the exterior when the second joint member 2 is handled independently. If the ferrule 3 is exposed, the distal surface 3a of the ferrule 3 and the tapered surface 31 are easily damaged when, for example, the second joint member 2 is transported or the pipe is joined. The cylindrical cover 22 prevents damage to the distal portion 3a of the ferrule 3 and the tapered surface 31. The cylindrical cover 22 is formed by extending a wall provided forward from the external thread 21. The distal end of the cylindrical cover 22 is located forward from the distal end of the ferrule 3. In other words, the distal end of the ferrule 3 is arranged in the cylindrical cover 22. This structure allows the cylindrical cover 22 to reliably protect the distal portion 3a of the ferrule 3.

A method for joining a pipe using the joint members with the above-described configurations will hereafter be explained.

To join the pipe using the first joint member 1 and the second joint member 2, the first joint member 1 is first secured at a predetermined position. The first joint member 1 is secured to a target such as a pipe, a pipe joint port of various devices, or a valve such as a closing valve. The pipe 4 to be joined is passed through the pipe through hole 25 of the second joint member 2 and the through hole 32 of the ferrule 3 so that the second joint member 2 is arranged around the pipe 4. Then, as illustrated in Fig. 1, the distal end of the pipe 4 is inserted into the pipe insertion hole 12 so that the distal end of the pipe 4 contacts the stepped portion 12a. Subsequently, the external thread 21 is screwed into the internal thread 11 of the first joint member 1. In this manner, fastening the second joint member 2 to the first joint member 1 is started.

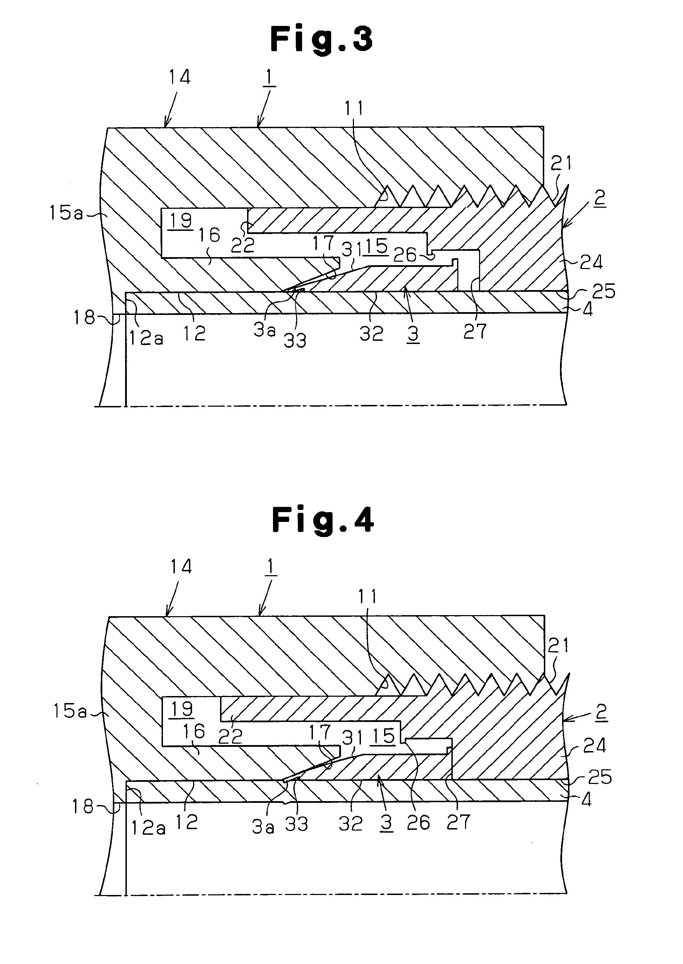

As the second joint member 2 is further fastened from this state, the distal portion 3a of the ferrule 3 contacts the cam surface 17, as illustrated in Fig. 2. By this stage, fastening can be carried out manually by the operator. After this stage, normally, the second joint member 2 is further fastened using a fastening tool. This applies the axial pressing force to the thin portion 26 with which the ferrule 3 is joined, thus cutting the thin portion 26, as illustrated in Fig. 3. As the second joint member 2 is further fastened, the pressing surface 27 presses the proximal portion of the ferrule 3, as illustrated in Fig. 4. As a result, the distal portion 3a of the ferrule 3 is pressed and bent from the notch 33 and bites into the surface of the pipe 4.

By causing the distal portion 3a of the ferrule 3 to bite into the surface of the pipe 4, the space between the pipe 4 and the inner surface of the through hole 32 of the ferrule 3 is sealed and the pipe 4 is held immovable in the axial direction. Further, by firmly pressing the tapered surface 31 of the ferrule 3 against the cam surface 17, the space between the cam surface 17 and the tapered surface 31 of the ferrule 3 is sealed.

As has been described, the thickness of the thin portion 26 may be set to a small value so that the thin portion 26 can be cut by the pressing force generated through manual fastening by the operator. In this case, after the thin portion 26 is cut, great force is not necessary for fastening the second joint member 2 until the pressing surface 27 contacts the proximal surface of the ferrule 3. Thus, in this period, fastening can be carried out manually by the operator. After the pressing surface 27 contacts the proximal surface of the ferrule 3, the second joint member 2 may be fastened to the first joint member 1 using a fastening tool.

The present embodiment has the following advantages.

Since the cylindrical cover is arranged outside the ferrule 3, the ferrule 3 is prevented from being exposed to the exterior. This prevents a damage to the outer surface of the ferrule 3 when, for example, a pipe is joined or a component is transported.

When the first joint member 1 and the second joint member 2 are completely assembled, the ferrule 3 is separated from the second joint member 2 and bites into the pipe 4. This makes it easy to separate the first joint member 1 from the second joint member 2 when it is necessary to remove the pipe 4 that has been joined. As a result, in maintenance work, for example, the pipe 4 that has been joined is easily removed.

The ferrule 3 is isolated from the second joint member 2 and functions as an independent ferrule when the first joint member 1 and the second joint member 2 are assembled . As a result, as in the case of a ferrule formed independently from the joint members 1, 2, the axial pressing force may be applied from the first joint member 1 and the second joint member 2 to the ferrule 3 so that the axial pressing force acts to deform the ferrule 3 to bite into the surface of the pipe 4. This improves the air tightness brought about by the ferrule 3.

Before biting into the pipe 4 to be joined, the ferrule 3 receives the axial pressing force and separates from the second joint member 2 while held in contact with the cam surface 17. This prevents the surface of the pipe 4 into which the ferrule 3 bites and the cam surface 17 from being damaged by rotation of the ferrule 3. As a result, the air tightness ensured by the ferrule 3 after the first joint member 1 and the second joint member 2 are assembled is enhanced.

The ferrule 3 is secured to the second joint member 2 through the thin portion 26, which extends in a direction crossing (in the present embodiment, extending substantially perpendicular to) the axis of the second joint member 2. As a result, the ferrule 3 is easily cut off by the axial pressing force produced by fastening the second joint member 2.

The annular ferrule 3 is connected through the annular thin portion 26. Accordingly, when cut, the thin portion 26 is uniformly cut substantially at its entirety. As a result, uneven biting of the ferrule 3 is prevented, and effective air tightness is ensured by the ferrule 3.

The thin portion 26 is arranged forward from the distal end of the external thread 21. The second joint member 2 thus can be machined while the strength of the external thread portion 24 is maintained. This prevents the axis of the external thread 21 from becoming offset due to distortion of the external thread portion 24, and suppresses uneven engagement of the ferrule 3. The air tightness brought about by the ferrule 3 is thus prevented from lowering.

The cylindrical cover 22 is formed in a manner extending continuously from the wall provided forward from the external thread 21. This arrangement facilitates the fabrication of the cylindrical cover 22, which covers the ferrule 3.

The distal end of the ferrule 3 is located in the cylindrical cover 22. This arrangement protects the distal portion 3a of the ferrule 3, which, if damaged, lowers the air tightness ensured by the ferrule 3.

The first joint member 1 includes the cylindrical recess 19, which receives the cylindrical cover 22. As a result, the cylindrical cover 22, which proceeds into the first joint member 1 as the second joint member 2 is fastened, is reliably accommodated.

The second joint member 2 includes the annular pressing surface 27, which presses the rear end surface of the ferrule 3 functioning as the independent ferrule 3 after having been cut off, at the position spaced rearward from the ferrule 3 by a predetermined distance. As a result, the pressing surface 27 is located close to the distal end of the external thread 21 in the axial direction of the second joint member 2. This reduces the offset amount between the axes of the external thread 21 and the pressing surface 27. The pressing surface 27 is arranged in the vicinity of the distal end of the external thread 21 and rearward from the distal end of the external thread 21. This minimizes the offset amount between the axes of the pressing surface 27 and the external thread 21 while maintaining the strength of the external thread portion 24.

In a refrigerating apparatus in which the bite-in type pipe joint of the present embodiment is employed in either one of a refrigerant circuit or a water circuit or in both of the refrigerant circuit and the water circuit, or in a water heating device in which the bite-in type pipe joint is deployed in either one of a water heating circuit or a water supply circuit or in both of the water heating circuit and the water circuit, the air tightness of the pipe joint in each circuit improves, thus enhancing the reliability of the apparatus or the device as a whole.

The above embodiment may be modified as follows.
(1) In the illustrated embodiment, the first joint member 1 having the internal thread 11 configures the body of the bite-in type pipe joint. However, the body of the bite-in type pipe joint may be constituted by the second joint member 2 having the external thread 21.
(2) In the illustrated embodiment, the pressing surface 27 is formed as a flat surface that extends substantially perpendicular to the center line (the axis) of the second joint member 2. However, the pressing surface 27 is not restricted to this as long as the pressing surface 27 is a surface that extends across the axis by an angle that is not excessively small. For example, as in the prior art example illustrated in Fig. 7, the pressing surface 27 may be formed as an inclined surface that inclines forward, or in a tapered shape with a diameter that becomes smaller in a forward direction, with respect to the second joint member 2.
(3) It is preferred that the inclination angle α of the cam surface 17 and the inclination angle β of the tapered surface 31 of the ferrule 3 be each set to an optimal value in correspondence with, for example, the material of the pipe, the diameter of the pipe, and the shape and the dimensions of the ferrule. Further, the shapes of the cam surface 17 and the tapered surface 31 are not restricted to flat surfaces. For example, if the cam surface 17 is employed for metal material such as a copper pipe, the inclination angle of the cam surface 17 may be set to a great value so that the ferrule 3 easily bites into the pipe.
(4) In the first joint member 1 functioning as the body of the bite-in type pipe joint, the external thread 13a is formed in the joint port 13. However, instead of connection by means of the external thread 13a, a pipe may be connected through brazing or a joint port of a closing valve or the like may be connected through brazing.

### INDUSTRIAL APPLICABILITY

The present invention may be employed in a bite-in type pipe joint used in, for example, a refrigerating circuit, a water circuit, or a gas circuit of, for example, a refrigerating apparatus, an air conditioning apparatus, a water heating device such as a water heater, a water supply device, or other general manufacturing facilities. Also, the bite-in type pipe joint according to the present invention may be used to join pipes or as a pipe joint portion of a valve such as a closing valve or a pipe joint portion of other various devices. Pipes to which the bite-in type pipe joints of the present invention can be applied include metal pipes such as copper pipes and stainless steel pipes and resin pipes.

## Claims

1. A bite-in type pipe joint employed to join a pipe, the pipe joint including a joint member having an internal thread and a joint member having an external thread screwed into the internal thread,
the pipe joint being **characterized in that** the joint member having the external thread includes an annular ferrule secured to the joint member and a cylindrical cover covering an outer circumference of the ferrule,
wherein the ferrule separates from the joint member having the external thread and bites into the pipe by the time the joint members are fastened to each other.

2. The bite-in type pipe joint according to claim 1, **characterized in that,** when the joint members are fastened to each other, the ferrule separates from the joint member having the external thread and functions as an independent ferrule.

3. The bite-in type pipe joint according to claim 2, **characterized in that** the joint member having the internal thread has a cam surface with which a distal portion of the ferrule comes into contact when the joint members are fastened to each other, wherein the ferrule separates from the joint member having the external thread by receiving an axial pressing force while held in contact with the cam surface before biting into the pipe.

4. The bite-in type pipe joint according to claim 3, **characterized in that** the ferrule is secured to the joint member having the external thread by a thin portion that extends in a direction crossing the axis of the joint member having the external thread.

5. The bite-in type pipe joint according to claim 4, **characterized in that** the thin portion has an annular shape.

6. The bite-in type pipe joint according to claim 4 or 5, **characterized in that** the thin portion is formed forward from a distal end of the external thread in the axial direction of the joint member having the external thread.

7. The bite-in type pipe joint according to any one of claims 4 to 6, **characterized in that** the cylindrical cover is formed in a manner extending continuously from a wall provided forward from the distal end of the external thread in the axial direction of the joint member having the external thread.

8. The bite-in type pipe joint according to claim 7, **characterized in that** a distal end of the ferrule is arranged in the cylindrical cover.

9. The bite-in type pipe joint according to claim 7 or 8, **characterized in that** the joint member having the internal thread includes a cylindrical recess that is located between an outer wall of the joint member and the cam surface and accommodates the cylindrical cover when the joint members are fastened to each other.

10. The bite-in type pipe joint according to any one of claims 4 to 9, **characterized in that** the pipe joint having the external thread includes an annular pressing surface that is located at a position spaced rearward from the ferrule by a predetermined distance and presses a proximal surface of the ferrule that has been isolated and functions as the independent ferrule.

11. The bite-in type pipe joint according to claim 10, **characterized in that** the pressing surface is formed in the vicinity of the distal end of the external thread and rearward from the distal end of the external thread in the axial direction of the joint member having the external thread.

12. A refrigerating apparatus **characterized by** comprising the bite-in type pipe joint according to any one of claims 1 to 11 that is provided in a refrigerant circuit, in a water circuit, or in both of the refrigerant circuit and the water circuit.

13. A water heating device **characterized by** comprising the bite-in type pipe joint according to any one of claims 1 to 11 that is provided in a water heating circuit, in a water supply circuit, or in both of the water heating circuit and the water circuit.
